# EUROPÄISCHE PATENTANMELDUNG

(11) **EP 2 287 945 A1**
(43) Veröffentlichungstag der Anmeldung: **23.02.2011**
(21) Anmeldenummer: 09009558.9
(22) Anmeldetag: 23.07.2009
(51) Int. Cl.: H01M 4/36, H01M 10/0525, H01M 2/16, H01M 4/505

(54) **Leistungs- und energiedichteoptimierte Flächenelektroden für elektrochemische Energiespeicher**

(71) Anmelder: Fraunhofer-Gesellschaft zur Förderung der angewandten Forschung e.V., 80686 München (DE)
(72) Erfinder: Neumann, Gerold, Dr., 25469 Halstenbek (DE); Würsig, Andreas, Dr., 25524 Itzehoe (DE); Gulde, Peter, Dr., 25524 Itzehoe (DE)
(74) Vertreter: Olgemöller, Luitgard Maria

(57) **Zusammenfassung**

Die Erfindung betrifft einen Elektrodenschichtverbund zur Ausbildung flächiger Elektroden (1,2) in elektrochemischen Speicherelementen, der wenigstens eine erste elektrodenmaterialhaltige Schicht (6,8) und eine zweite elektrodenmaterialhaltige Schicht (7,9) aufweist, wobei die erste Schicht (6,8) eine höhere Energiedichte (spezifische bzw. Flächen-Kapazität) als die zweite Schicht (7,9) besitzt, während die zweite Schicht (7,9) eine höhere Leistungsdichte (Stromtragfähigkeit) pro Flächeneinheit als die erste Schicht (6,8) besitzt.

## Beschreibung

Die vorliegende Erfindung betrifft einen Elektrodenschichtverbund zur Ausbildung flächiger Elektroden in elektrochemischen Speicherelementen wie Batterien und Akkumulatoren, ein elektrochemisches Speicherelement zur Speicherung sowie Abgabe elektrischer Energie mit einer flächigen Anode, einem Separator und einer flächigen Kathode, aufweisend einen solchen Elektrodenschichtverbund, sowie ein Verfahren zur Herstellung solcher Elektrodenschichtverbünde und damit versehener Speicherelemente.

Elektrochemische Speicherelemente, aufgebaut aus flächenförmigen Elektroden- und Separatorschichten, insbesondere auf der Basis von Folientechnologien, sind allgemein bekannt. Sie weisen als Elektroden flächige Anoden und Kathoden auf, die durch einen Separator voneinander getrennt und jeweils mit einem Stromableiter verbunden sind, über den eine Ankontaktierung erfolgt. In Lithiumionen-Zellen werden die Folien in der Regel zu einem mehrlagigen Wickelkörper verarbeitet und in ein festes Metallgehäuse eingepresst. In dieses wird dann der flüssige Elektrolyt gegeben und anschließend das Batteriegehäuse hermetisch verschlossen. Bei Lithium-Polymer-Zellen handelt es sich um Flachzellen, die auch prismatische Zellen genannt werden. Hier werden die Elektroden, meist in Form von Folien, typischerweise gestapelt und unter Druck- und gegebenenfalls Temperatureinwirkung oder durch Verkleben innig miteinander verbunden. Der Batteriekörper wird in ein Gehäuse, in der Regel in eine metallisierte Kunststofffolie eingebracht, mit Elektrolyt befüllt und dann durch Versiegeln der Gehäusefolienberandung verschlossen. Im Innern des Gehäuses wird beim endgültigen Verschließen ein Vakuum eingestellt. Der Elektrolyt wird bei diesem Zelltyp im Batteriekörper in in der Elektroden- und Separatorstruktur vorhandene Mikroporen inkorporiert oder durch Gelifizierung des Polymerbinders in den Schichten absorbiert und immobilisiert.

Die elektrochemisch aktiven Materialien für Elektrodenfolien sind im Allgemeinen pulverförmig und weisen eine bestimmte Korngrößenverteilung auf. Sie werden mittels eines Binders zu Folien verarbeitet. In der US 5,219,680 A wird beispielsweise eine Kohlenstoff-Polymer-Elektrode als Anode bestehend aus amorphen Kohlenstoffpartikeln, die in einer Polymermatrix gebunden sind, beschrieben. Um die ionische Leitfähigkeit zwischen den Kohlenstoffpartikeln in der Elektrode herzustellen, wird die Anode mit einem Flüssigelektrolyten befüllt. Dieser wird in Poren bzw. in der Polymermatrix aufgenommen. Materialien für die Kathode, wie zum Beispiel LiCoO₂, werden in fertigungstechnisch vergleichbarer Weise wie in der US 5,219,680 für die Anode beschrieben in Folien überführt.

Für Separatoren sind verschiedene Wege zur Herstellung bekannt. So gibt es die Möglichkeit, Flüssigelektrolyte zu gelifizieren und sie so in Folien umzuarbeiten. Ein solcher Weg ist z.B. aus der Patentschrift US 5,009,970 bekannt. Eine andere Vorgehensweise besteht darin, eine Folie mit feinporiger Schwammstruktur herzustellen und diese nach Fertigstellung des Folienverbundes durch Imprägnierung in einem Flüssigelektrolyt ionisch leitfähig zu machen. Dieses Verfahren ist aus der Patentschrift US 5,464,000 bekannt. Die DE 198 39 217 A1 beschreibt eine Möglichkeit, Feststoff-Ionenleiter in eine Polymermatrix einzubinden und so eine Separatorfolie herzustellen.

Pastöse Massen, Elektroden und Festkörperelektrolyte in Lithiumtechnologie sowie unter Verwendung dieser Materialien hergestellte elektrochemische Zellen, insbesondere Akkumulatorzellen, sind unter anderem aus WO 00/13249, WO 00/63984, WO 01/33656 A1 und WO 01/41246 A1 bekannt.

Elektrochemische Energiespeicher auf Basis von Lithium-Akkumulatoren haben eine sehr große wirtschaftliche Bedeutung erlangt. Sie werden derzeit als eine der aussichtsreichsten Optionen für die Einführung von Hybrid- oder sogar komplett elektrisch betriebenen Fahrzeugen betrachtet. Dabei müssen die Energiespeicher zahlreichen Anforderungen gerecht werden. Während bei Konsumeranwendungen in erster Linie eine hohe volumetrische sowie gravimetrische Energiedichte im Vordergrund steht, kommen bei Fahrzeuganwendungen unter anderem Schnellladefähigkeit und hohe Pulsbelastbarkeit, also hohe Leistungsdichte, und weite Temperatureinsatzbereiche sowie eine hohe Eigensicherheit hinzu.

Insbesondere die Anforderungen einer hohen Leistungsdichte, z.B. hohe Pulsbelastbarkeit, und hoher gravimetrischer sowie volumetrischer Energiedichte sind nach dem Stand der Technik nicht gleichzeitig in einer Speicherzelle oder für eine Elektrode zu realisieren. Dies soll am Beispiel eines Lithiumakkumulators erläutert werden:

In einem solchen werden beim Laden Lithiumionen unter Wirkung eines von Außen aufgeprägten elektrischen Feldes von der Kathode über den Separator zur Anode verschoben. Der Separator als Trennschicht zwischen Anode und Kathode ist rein ionenleitend, so dass Elektronen nur der Weg über den äußeren Stromkreis zur Anode möglich ist, um das Ladungsgleichgewicht im Akkumulator aufrecht zu erhalten. Daraus resultiert zwangsläufig, dass in den Elektroden über deren Schichtdicke hinweg bis zur dem Separator zugewandten Phasengrenze eine gute Ionen- und Elektronenleitung sichergestellt sein muss.

Die elektronischen und ionischen Leitfähigkeiten in der Struktur des elektrochemischen Speicherelements beruht auf verschiedenen Mechanismen mit unterschiedlichen Werten für Leitfähigkeit und ggf. Temperaturabhängigkeiten. Dabei gibt es sowohl materialabhängige Beiträge, wie Partikelgröße des Elektrodenmaterials, als auch durch das Zelldesign bestimmte Anteile, wie die Abmessungen der Elektrode. Durch die Wahl der Materialmorphologie sowie durch das Zelldesign können die Zellen jedoch nur entweder in Richtung einer hohen Belastbarkeit (entsprechend geringem Innenwiderstand) oder in Richtung einer hohen Energiedichte ausgelegt werden.

Aus der Gitterstruktur der Festkörperpartikel des elektrochemisch aktiven Materials werden in einem Batterie- oder Akkumulatoraufbau bei Lade- oder Entladevorgängen Lithiumatome als Ionen reversibel ein- bzw. ausgebaut. Diese wandern im Festkörper an die Oberfläche des Partikels durch Festkörperdiffusion. Da Lithiumionen im Festkörper bewegt werden, ist aus Gründen der Ladungsneutralität zusätzlich auch eine ausreichende elektronische Leitfähigkeit erforderlich, die in der Regel deutlich von der ionischen Leitfähigkeit abweicht. Am Beispiel von Daten der Leitfähigkeiten des Kathodenmaterials LiCoO₂ wird die Problemstellung deutlich:

| | |
|---|---|
| Elektronische Leitfähigkeit: | 0,43 bis 4.800 mS/cm (abhängig vom Ladezustand) |
| Ionische Leitfähigkeit: | ca. 3*10⁻⁴ mS/cm |

Die angegebenen Leitfähigkeiten beziehen sich auf die Beweglichkeit der Elektronen bzw. Ionen in den Aktivmaterialpartikeln des Elektrodenmaterials. Für einen Einsatz in einer Zelle ist in der Regel eine Gesamtleitfähigkeit der Zelle von mindestens 1 bis 10 mS/cm erforderlich. Die erforderlichen Leitfähigkeiten können durch Zugabe bzw. Beimengung von Leitfähigkeitsverbesserern wie Ruß für die elektronische und von Elektrolyt für die ionische Leitfähigkeit erzeugt werden. Die Leitfähigkeitsverbesserer wirken jedoch erst außerhalb des Festkörperpartikels, also erst, wenn das Ion bzw. das Elektron aus dem Festkörper in die umgebende Matrix aus Ruß und Elektrolyt übergewechselt ist. Da die Festkörperdiffusion langsamer abläuft als die Diffusion in der umgebenden Matrix, wird eine hohe Leistungsdichte durch kurze Laufwege im Festkörper, also eine möglichst geringe Partikelgröße, begünstig. Des Weiteren wird eine hohe Leistungsdichte auch durch kurze Laufwege in der Matrix begünstigt. Hochbelastbare Elektroden, d.h. Elektroden mit einer hohen Leistungsdichte, weisen daher im Allgemeinen ein Elektrodenmaterial mit kleinen Partikeldurchmessern bis in den Nanometerbereich hinunter sowie zusätzlich geringe Elektrodenstärken oder - dicken auf.

Materialien mit kleinen Partikelgrößen benötigen bei der Verarbeitung zur Batterieelektrode in der Regel einen hohen Binderanteil, um den mechanischen Zusammenhalt der Elektrode zu gewährleisten. Da Binder in der Elektrode eine weitestgehend inaktive Substanz darstellt, wird die Energiedichte der Zelle durch einen hohen Binderanteil in Relation zum Aktivmaterial reduziert. Werden zur Erreichung einer gewünschten Zielkapazität eine größere Anzahl von Zellelementen einer bestimmten Dicke parallel geschaltet, kommt es im Vergleich zu dickeren Elektroden zu einer weiteren Reduktion der Energiedichte, da vergleichsweise viel Separatormaterial und metallische Stromableiter in der Zelle verarbeitet werden müssen, die bezogen auf die Speicherfähigkeit der Zelle totes Material darstellen. Eine hochbelastbare Elektrode nach dem Stand der Technik zieht insgesamt eine reduzierte Energiedichte nach sich.

Eine hohe Energiedichte kann begünstigt werden durch eine hohe Dicke der Elektrode sowie große Partikeldurchmesser der Aktivmaterialien entsprechend einem hohen Aktivmasseanteil in der Verbundelektrode, da die Elektrode hierdurch größere Mengen an Ladungsträgern enthalten kann, wodurch ihre Speicherkapazität vergrößert wird. Eine hohe Elektrodendicke sowie große Partikeldurchmesser führen jedoch zu größeren Laufwegen für die Elektronen und Ionen, wodurch wiederum die Leistungsdichte verringert wird.

Die zuvor beschriebene Unvereinbarkeit von hoher Belastbarkeit, also hoher Leistungsdichte, und gleichzeitiger Erhaltung einer hohen Energiedichte im elektrochemischen Speicherelement wird nach dem Stand der Technik zum Beispiel dadurch aufgelöst, dass Akkumulatoren hoher Energiedichte entweder mit sogenannten Superkondensatoren (SuperCaps), die eine sehr geringe Energiedichte aber außerordentlich hohe Leistungsdichte haben, oder mit Akkumulatoren gepaart werden, die auf eine hohe Leistungsdichte hin optimiert sind. Der Nachteil in der Konfiguration mit Supercaps ist, dass sich die Entladekennlinien von Akkumulatoren und SuperCaps signifikant unterscheiden, so dass in der Regel eine Anpassung über eine Elektronik erfolgen muss. Eine solche Anordnung ist zum Beispiel beschrieben in der EP 1 391 961 A1. Dies bedeutet jedoch unerwünschten Mehraufwand an Elektronik. Parallelschaltungen von Hochenergie- und Hochleistungszellen sind ebenfalls verschiedentlich beschrieben worden, so z.B. in der WO 03/088375 A2 sowie in der WO 03/088375 A2. Auch hier sind kostspielige elektronische Ausgleichschaltungen erforderlich.

Ausgehend von dem zuvor beschriebenen Stand der Technik liegt der vorliegenden Erfindung die Aufgabe zugrunde, eine flächenförmige Elektrode, insbesondere eine Elektrodenfolie, sowie einen elektrochemischen Energiespeicher zu schaffen, die bzw. der sowohl eine hohe volumetrische sowie gravimetrische Energiedichte als auch eine hohe Pulsleistungsdichte und schnelle Entlade- bzw. Ladefähigkeit gleichzeitig ermöglicht, ohne dass hierzu zusätzliche externe Maßnahmen wie etwa elektronische Beschaltungen notwendig sind.

Die Lösung der oben beschriebenen Aufgabe besteht vorrichtungsseitig in einem Elektrodenschichtverbund zur Ausbildung insbesondere folienförmiger Elektroden in elektrochemischen Speicherelementen, der wenigstens eine erste Schicht und eine zweite Schicht aufweist, wobei die erste Schicht ("Hochenergieschicht") eine höhere Energiedichte und damit eine höhere Flächenkapazität (mAh/cm²) als die zweite Schicht aufweist, während die zweite Schicht ("Hochleistungsschicht") eine höhere Leistungsdichte und damit eine höhere Stromtragfähigkeit (mA/cm²) als die erste Schicht aufweist.

Sie wird des Weiteren gelöst durch ein elektrochemisches Speicherelement zur Speicherung sowie Abgabe elektrischer Energie mit einer flächigen, insbesondere folienförmigen Anode, einem Separator und einer flächigen, insbesondere folienförmigen Kathode, wobei die Anode und/oder die Kathode einen erfindungsgemäßen Schichtverbund aufweist bzw. aufweisen.

Verfahrenseitig wird die Aufgabe gelöst durch ein Verfahren zur Herstellung einer erfindungsgemäßen Flächenelektrode oder eines erfindungsgemäßen elektrochemischen Speicherelements, bei dem die erste Schicht und die zweite Schicht insbesondere getrennt hergestellt und unter Druck- und Temperatureinwirkung laminiert werden oder indem zunächst eine der beiden Schichten in einem Tapecasting-Prozess auf einem Substrat abgeschieden und die andere Schicht nachfolgend in einem weiteren Tapecasting-Prozess auf die eine Schicht abgeschieden wird. Eine solche Elektrodenkonfiguration wird vorteilhaft mit einem metallischen Stromableiter verbunden. Dieser liegt z.B. als vorzugsweise geprimerte Folie vor, die als Substrat für den Beschichtungsprozess verwendet werden kann oder die durch Lamination mit der Doppelschichtelektrode verbunden wird. In einer anderen Ausführungsform wird ein vorzugsweise geprimerter, offenporiger Stromalbleiter zwischen die Hochenergieschicht und die Hochleistungsschicht eingebracht. In dieser Konfiguration ist es günstig, wenn die offenporige Struktur einen Anteil offener Fläche von mindestens 50% aufweist.

Unter einer Flächenelektrode im Sinne der vorliegenden Erfindung sind Elektrodenflachkörper oder Flachmaterialien in ebener oder gebogener Gestalt zu verstehen. Die Folien können sowohl flexibel als unflexibel (im letzteren Fall starr oder nur schwer biegbar) sein. Unter "Flachmaterialien" oder "Flächengebilden" sind erfindungsgemäß Materialien zu verstehen, deren Länge und Breite eine deutlich größere Abmessung besitzen als ihre Dicke, d.h. deren Abmessung in beiden Flächenrichtungen mindestens das Doppelte, und in der Regel mindestens in einer Richtung der Flächenebene mindestens das Zehnfache, vorzugsweise mindestens das 100-fache oder gar mindestens das 1000-fache des Dickendurchmessers betragen. Folienmaterialien sind meistens flexibel.

Die vorliegende Erfindung betrifft elektrochemische Energiespeicher, insbesondere in Form flacher (auch gestapelter) oder gewickelter Batterien und Akkumulatoren, die flächige, insbesondere folienartige Elektroden aufweisen, insbesondere Lithium-Ionen-Zellen und Lithium-Polymer-Zellen. In beiden Fällen dienen Flächengebilde als Ausgangsprodukt für die Elektroden sowie den Separator, der Anode und Kathode voneinander trennt. Als Kathodenmaterialien für Elektroden in Lithiumbatterien bzw. Lithium-Akkumulatoren steht eine Reihe von Materialien zur Verfügung. Beispielhaft seien hier als Kathodenmaterialien genannt LiCoO₂, LiMn₂O₄, LiMePO₄ (Me: Metall, z.B. Fe, Co), LiNiO₂, LiMnₓNi_{y}Co_{z}O₂ (x+y+z=1), LiNiₓCo_{y}O₂ (x+y=1), V₂O₅ sowie LiAlₓNiyCo_{z}O₂ (x+y+z=1). Dem Fachmann sind weitere Materialien bekannt. Als Anodenmaterialien für Folienelektroden in Lithiumbatterien bzw. Lithium-Akkumulatoren steht ebenfalls eine Reihe von Materialien zur Verfügung. Beispielhaft seien hier als Anodenmaterial genannt Graphite, vorzugsweise in unterschiedlichen Modifikationen, Hard Carbons, Zinnverbindungen, Silizium, metallisches Lithium, TiO₂, Li₄Ti₅O₁₂ sowie Mischungen aus diesen. Dem Fachmann sind weitere Materialien bekannt. Die Materialien werden als Pulver mit einer bestimmten Korngrößenverteilung hergestellt. Aus diesen Partikeln wird - in der Regel durch Einbettung in einen Binder - eine Schicht gebildet, aus der in einem Batterie- oder Akkumulatoraufbau Lithium reversibel ein- oder ausgebaut werden kann.

Als Binder eignen sich alle aus dem Stand der Technik bekannten Materialien. Geeignet sind lösungsmittelfreie, insbesondere aber lösungs- und/oder quellmittelhaltige Bindemittel. Besonders geeignet sind fluorierte Kohlenwasserstoff-Polymere wie Teflon, Polyvinylidenfluorid (PVDF) oder Polyvinylchlorid. Folien oder Schichten, die mit diesen Bindermitteln hergestellt werden, sind besonders gut wasserabweisend, was den damit erzeugten elektrochemischen Bauelementen eine besonders gute Langzeitstabilität verleiht. Weitere Beispiele sind Polystyrol oder Polyurethan. Als Beispiele für Copolymere seien Copolymere von Teflon und amorphem Fluorpolymer sowie Polyvinylidenfluorid/Hexafluoropropylen genannt. Unabhängig davon, ob der Binder ein Lösungs- und/oder Quellmittel enthält oder nicht, kann ein Plastifizierer (auch Weichmacher genannt) für das bzw. die eingesetzten Polymermaterialien vorhanden sein. Unter "Plastifizierer" sind Substanzen zu verstehen, deren Moleküle durch Nebenvalenzen (Van-derWaals-Kräfte) an die Polymermoleküle gebunden werden. Sie verringern die Wechselwirkungskräfte zwischen den Makromolekülen und setzen dadurch die Erweichungstemperatur und die Sprödigkeit und Härte der Kunststoffe herab. Aufgrund ihrer geringeren Flüchtigkeit lassen sie sich allerdings häufig nicht durch Abdampfen aus dem Kunststoff entfernen, sondern müssen gegebenenfalls durch ein entsprechendes Lösungsmittel herausgelöst werden. Das Einarbeiten eines Plastifizierers bewirkt eine hohe mechanische Flexibilität der damit hergestellten Folien.

Als weitere Binder kommen auch z.B. synthetische Kautschuke wie SBC (StyrolButadien-Kautschuk) oder CMC (Carboxymethylcellulose) oder Mischungen aus beiden in Frage. Diese sind wasserlöslich.

Es gibt allerdings spezielle Fälle, in denen auf einen Binder vollständig verzichtet werden kann, z.B. dann, wenn die Feststoffpartikel für das Elektroden- bzw. Festkörperelektrolytmaterial eine ausreichende Kohäsion besitzen, wie es bei manchen Nanopartikeln der Fall sein kann, siehe WO 00/63984. Die Schicht oder Folie wird dann aus einer Paste geformt, die aus den Nanopartikeln in einem geeigneten Suspensionsmittel besteht.

Die Erfindung stellt ein neues Konzept für den Aufbau flächenförmiger Elektroden und elektrochemischer Energiespeicher sowie für Herstellungsverfahren für solche Energiespeicher vor, mit dem in einem Bauelement gleichzeitig hohe Energiedichten und hohe Leistungsdichten erreicht werden können. Die Erfüllung dieser beiden Eigenschaften in einem Bauelement ist für Energiespeicher zum Beispiel in Hybridfahrzeugen von wesentlicher Bedeutung. Hohe gewichtsbezogene Energiedichten erlauben hohe Fahrzeugreichweiten im reinen Elektrofahrbetrieb durch Gewichtsreduktion. Platzersparnis im Fahrzeug wird durch ein geringes Volumen erreicht und eine hohe Leistungsdichte ermöglicht gute Rekuperationseigenschaften im Bremsbetrieb und hohe Belastbarkeit bei Beschleunigungsvorgängen. Die hohe Leistungsdichte wird also vorrangig im Pulsbetrieb von den Zellen gefordert. Solchen Pulsprofilen bei gleichzeitig hoher Energiedichte der Zelle trägt die Erfindung Rechnung.

Dazu weisen die Elektroden wenigstens zwei Teilbereiche oder Schichten mit unterschiedlichen Eigenschaften auf. Der erste Teilbereich bzw. die erste Schicht ist auf hohe Energiedichte ausgelegt und wird auch als Hochenergieschicht bezeichnet. Der zweite Teilbereich bzw. die zweite Schicht ist auf hohe Leistungsdichte ausgelegt und wird auch als Hochleistungsschicht bezeichnet. Insbesondere weist die erste Schicht eine höhere Energiedichte als die zweite Schicht auf, während die zweite Schicht eine höhere Leistungsdichte als die erste Schicht aufweist. Die erste Schicht stellt aufgrund ihrer relativ hohen Energiedichte ein großes Speichervolumen der Elektrode für Ladungsträger dar. Wie zuvor dargelegt wurde, besitzt die erste Schicht allerdings nur eine relativ geringe Leistungsdichte. Diese besitzt hingegen die zweite Schicht, die jedoch nur über eine relativ geringe Energiedichte verfügt. Durch die Kombination beider Schichten wird eine folienförmige Elektrode geschaffen, die in vorteilhafter Weise sowohl über eine hohe Leistungs- als auch über eine hohe Energiedichte verfügt.

Kurzfristige hohe Belastungen (Pulsbetrieb) werden überwiegend durch Ladungsträgerverschiebungen in der Hochleistungsschicht abgefangen, lang andauernde, gleichmäßige Belastungen durch Ladungsträgerverschiebungen in der Hochenergieschicht. Kommt es bei einem Pulsbetrieb zu einer stärkeren Entleerung der Hochleistungsschicht in Relation zur Hochenergieschicht, wird dieses Ungleichgewicht durch einen Ladungsträgeraustausch zwischen der Hochenergie- und der Hochleistungsschicht ausgeglichen.

Nach einer Ausführungsform der Erfindung weist die erste Schicht (Hochenergieschicht) eine größere Schichtdicke als die zweite Schicht (Hochleistungsschicht) auf. Alternativ oder zusätzlich weist die erste Schicht ein Elektrodenmaterial auf, das einen größeren Partikeldurchmesser als das Elektrodenmaterial der zweiten Schicht besitzt. Die daraus gebildete Verbundelektrode enthält somit einen hoch belastbaren Teil mit Elektrodenmaterialien mit möglichst kleinen Partikeldurchmessern und einer geringen Schichtdicke, sowie einen anderen Teil mit hoher Energiedichte, der in der Regel große Partikeldurchmesser und eine möglichst hohe Schichtdicken aufweist.

Geeignete Partikeldurchmesser (mittlere Primärpartikelgröße bei geringem Agglomeratzustand) des Elektrodenmaterials für die Hochenergieschicht liegen in vorteilhafter Weise im Bereich von ca. 0,5 - 10 µm, bevorzugt bei ca. 0,7 - 6 µm. Die Partikeldurchmesser für die Hochleistungsschicht liegen vorteilhaft im Bereich von ca. 1 nm bis 1 µm, vorzugsweise bei ca. 50 - 700 nm. Das Verhältnis der Partikeldurchmesser von Hochenergiematerial zu Hochleistungsmaterial liegt in der Regel im Bereich von 1,2 : 1 bis 20 : 1. Häufig wird man ein Verhältnis von 1.5 : 1 bis 7,5 : 1 und ganz besonders bevorzugt von etwa 5 : 1 wählen.

Ein erfindungsgemäßes elektrochemisches Speicherelement zur Speicherung sowie Abgabe elektrischer Energie besitzt eine Anode, einen Separator und eine Kathode, wobei Anode und/oder Kathode wenigstens einen erfindungsgemäßen Schichtverbund aufweisen, wie er vorliegend beschrieben wird. In bekannter Weise sind Anode sowie Kathode mit Stromsammlern verbunden, über die eine Außenkontaktierung erfolgt. Die jeweiligen Elektroden besitzen eine endliche Dicke, typischerweise zwischen ca. 50 µm und 200 µm, enthalten unter anderem Aktivmaterial, in der Regel außerdem Leitruß und Binder. Die elektronische Leitfähigkeit wird durch den Leitruß sichergestellt. Der Separator besteht entweder aus einem neutralen Material, beispielsweise einem gegebenenfalls durch elektrochemisch inerte, unlösliche Partikel (aus SiO₂ oder dergleichen) stabilisierten Bindemittel, wie es aus dem Stand der Technik bekannt ist. In das Bindemittel können statt dessen oder zusätzlich auch Partikel aus einem Material eingebettet sein, das ein Festkörperelektrolyt ist, wie Li_{1,3}Al_{0.5}T_{1,7}(PO₄)₃, LiTaO₃xSrTiO₃, LiTi₂(PO₄)₃xLi₂O oder Li₄SiO₄xLi₃PO₄, wie in WO 01/41246 A1 beschrieben. Alternativ können beispielsweise mikroperforierte Polymerfolien mit einer Dicke typischerweise zwischen 10 und 35 µm aus Polypropylen oder Polyethylen oder Verbundfolien aus beiden zum Einsatz kommen. Eine weitere Ausführungsform sind Vliese, die zum Beispiel mit Keramik beschichtet sind. Die ionische Leitfähigkeit wird in der Regel durch Zugabe eines flüssigen Elektrolyten in die assemblierte Zelle erreicht. Der Elektrolyt besteht typischerweise aus einem Leitsalz, das in einem organischen Lösemittel oder einem Lösemittelgemisch gelöst ist. Dieser Elektrolyt kann jeweils in die einzelnen Folien des Verbunds eingearbeitet werden; vorzugsweise wird er jedoch erst nach der Lamination der Einzelschichten in dem Schichtverbund aufgesogen, und zwar z.B. durch den Binder, gegebenenfalls unterstützt durch die genannten inerten, unlöslichen Partikel, sofern diese in der Lage sind, den Transport und die Speicherung von Elektrolytflüssigkeit zu verbessern, durch einen Konzentrationsgradienten an Plastifizierer im Binder und im Elektrolyten oder durch eine bei der Folienherstellung entstandene mikroporöse Struktur (z.B. erhalten durch Herauslösen von Plastifizierer aus dem Binder-Material) oder durch eine Mischung zweier oder aller der genannten Effekte.

Die erfindungsgemäßen Schichten liegen bevorzugt als Folien vor. Zur Erzeugung sowohl selbsttragender Schichten (Folien, Tapes) als auch von auf einem Substrat aufliegenden Schichten kann auf die üblichen, im Stand der Technik bekannten Verfahren zurückgegriffen werden, die für die entsprechenden Bindermaterialien anwendbar sind. Wichtige Techniken sind das sog. Tape-Casting, das sog. "reverseroll-on-coating", Gießen, Sprayen, Pinseln oder Rollern. Die Verfestigung der Matrix erfolgt dabei je nach Material beispielsweise durch Härten (von Harzen oder anderen Präkondensaten als Binder), durch Vernetzen von Präpolymerisaten oder linearen Polymerisaten als Binder, durch Abdampfen von Lösungsmittel oder auf ähnliche Art und Weise. Um selbsttragende Folien zu erhalten, kann beispielsweise eine geeignete pastöse Masse auf Kalandern in der geeigneten Dicke ausgeformt werden. Hier kann auf Standardtechnologie verwiesen werden. Selbsttragende Schichten können auch durch Auftragen einer pastösen Masse auf ein Substrat und Abziehen der erzeugten Schicht nach ihrer Verfestigung gebildet werden. Die Beschichtung kann mit üblichen Pastenauftragsverfahren durchgeführt werden. Beispielhaft sei hier das Aufstreichen, Aufrakeln, Aufspritzen, Spincoating und dergleichen genannt. Auch Drucktechniken sind möglich. Die Laminierung von Folien zum Verbund erfolgt bei einer geeigneten Temperatur, für das gängige System PVDF z.B. in geeigneter Weise bei 100 - 250°C, bevorzugt im Bereich von 135-150°C. Gegebenenfalls können Temperaturgradienten gefahren werden. Endlosfolien können dynamisch-kontinuierlich, z.B. mit einem Rollenlaminator, laminiert werden. Der Liniendruck dabei beträgt bevorzugt etwa 10 - 100 kg/cm.

Die Vorteile einer Herstellung in Folientechnologie liegen auf der Hand: Die Folientechnologie ist ein sehr wirtschaftliches Fertigungsverfahren, das ein hohes Maß an Formgebungsfreiheit bietet. Neben der Möglichkeit des Aufrollens lassen sich auch ohne großen Aufwand wechselnde andere, auch planare Geometrien realisieren. Zudem gewährleistet diese Technologie eine sehr große Kontaktfläche zwischen den einzelnen Schichten unterschiedlicher Funktionalität wie z. B. zwischen Elektroden und Elektrolyt in Akkumulatoren im Bezug auf das eingesetzte Volumen an elektrochemisch aktivem Material. Daraus resultieren in dieser Anwendung besonders günstige Lade- und Entladeeigenschaften.

Vorzugsweise ist ein Stromsammler mittelbar oder unmittelbar an der ersten Schicht (Hochenergieschicht) angeordnet. Der Grund hierfür sind die
Ladungsträgerbeweglichkeiten in den jeweiligen Schichten. Die Ionenbeweglichkeit in den Elektroden ist geringer als die der Elektronen. Ein durch Elektronenverschiebung hervorgerufenes Ladungsungleichgewicht muss durch Ionenfluss ausgeglichen werden, da es ansonsten zum Aufbau eines elektrischen Feldes kommt, das weitere Elektronenverschiebungen in der Elektrode hemmt. Wenn der Stromsammler an der Hochenergieschicht angeordnet ist, die - wie zuvor dargelegt wurde - eine relativ hohe Speicherkapazität jedoch nur eine relativ geringe Leistungsdichte, also Abgabe von Ladungsträgern pro Zeit, aufweist, können Ladungsverschiebungen und Ungleichgewichte ausgeglichen werden, da genügend Zeit für einen Ladungsausgleich durch Ionenfluss existiert. Vorzugsweise ist die zweite Schicht über die erste Schicht mit dem Stromsammler verbunden. Eine im Pulsbetrieb auftretende, kurzfristige hohe Leistungsdichte wird über einen Elektronenfluss von der Hochleistungsschicht über die Hochenergieschicht zum Stromsammler bewirkt.

Vorzugsweise sind die jeweilige Hochenergie- und Hochleistungsschicht innig miteinander verbunden, so dass mit Vorteil kein zusätzlicher Stromableiter notwendig ist. Die innige Verbindung lässt sich auf verschiedene Weise herbeiführen. Eine Möglichkeit ist, in getrennten Tapecasting-Prozessen jeweils zunächst alle Schichten getrennt herzustellen und diese dann in einem Laminationsprozess, d.h. unter Einwirkung von Druck und Temperatur, miteinander und ggf. mit einem Stromableiter zu verbinden. Alternativ ist es möglich, eine Schicht, wie zum Beispiel die Hochenergieschicht, zunächst über einen Tapecasting-Prozess komplett durchzuprozessieren und anschließend in einem zweiten Tapecasting-Prozess auf die andere Schicht, also im Beispielsfall auf die Hochleistungsschicht, abzuscheiden. Aus den so vorbereiteten Elektrodenfolien lässt sich dann die komplette Zelle entweder als gewickelte Rundzelle oder als prismatische Stapel- oder Wickelzelle aufbauen.

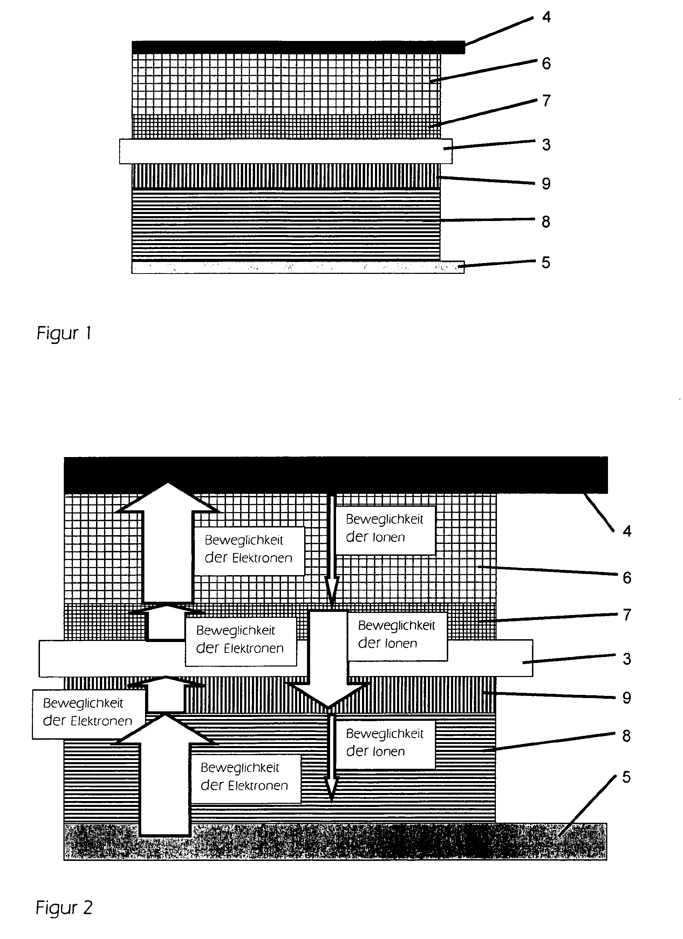

In der Fig. 2 sind die Stromflüsse und die Beweglichkeiten der einzelnen Ladungsträger in einer solchen Schichtenfolge beispielhaft beim Entladevorgang gezeigt. Die Abkürzungen HL bzw. HE stehen dabei für die Ströme in der Hochleistungs- bzw. Hochenergieschicht. Je stärker ein Pfeil ist, desto höher die erforderliche Beweglichkeit des Ladungsträgers in der jeweiligen Schicht. Da die Elektronen in jedem Falle, d.h. unter geringer Belastung des Akkumulators wie auch bei hoher Leistungsentnahme, den gesamten Stromkreis durch die Elektroden über die Stromableiter und zur Gegenelektrode durchlaufen müssen, ist eine hohe Elektronenleitfähigkeit in allen Schichten (mit Ausnahme der Separatorschicht) erforderlich. Eine erhöhte Ionenleitfähigkeit ist nur in dem Teil des Schichtsystems erforderlich, der auf hohe Belastbarkeit hin dimensioniert ist.

In einer weiteren Ausführungsform ist der Stromsammler zwischen der ersten und der zweiten Schicht angeordnet. Dabei kontaktiert er diese vorzugsweise unmittelbar. Der Separator kann zwischen der zweiten Schicht (Hochleistungsschicht) der Anode und der zweiten Schicht der Kathode angeordnet sein, vorzugsweise mit diesen in unmittelbarem Kontakt stehen. Auf diese Weise ist es möglich, die Elektronenlaufwege durch die Folien vorteilhaft zu verkürzen. Bei unveränderter Energiedichte wird so die Leistungsdichte eines erfindungsgemäßen Speicherelements erhöht. Der Separator ist eine rein ionen leitende Membran, die zwischen Anode und Kathode als dünne Trennschicht eingebracht wird. In der Regel handelt es sich um entweder mikroperforierte Membranen oder mikroporöse Membranen, die durch die Kombination eines Füllstoffes mit einem polymeren Binder entstehen. Durch die Zugabe von Elektrolyt wird die Ionenleitfähigkeit im Separator hergestellt.

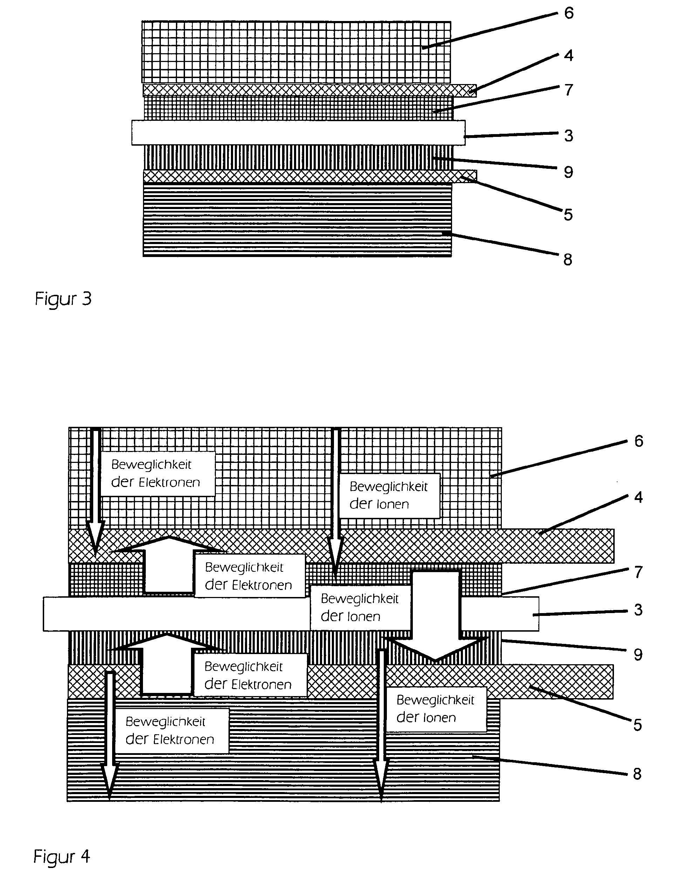

Insbesondere in der zuvor beschriebenen Ausführungsform ist es vorteilhaft, wenn der Stromsammler vorzugsweise jeder Elektrode eine offenporige Struktur aufweist, so dass Lithium-Ionen durch den Stromsammler hindurch treten können. Dieses ist besonders gut zu erreichen, wenn der Stromableiter im Wesentlichen aus einer perforierten Metallfolie oder einem perforiertem Streckmetall oder Ähnlichem besteht. Nachteil dieser Anordnung ist allerdings, dass die Durchtrittsfläche für Lithiumionen durch den offenporigen Stromableiter reduziert ist und somit der Ladungsaustausch zwischen der Hochenergie- und der Hochleistungsschicht verlangsamt wird. Die Stromflüsse im Falle der Entladung in dieser Konfiguration sind beispielhaft in Figur 4 dargestellt. Dicke und Richtung der Pfeile symbolisieren auch hier die Stromrichtungen sowie die notwendigen Beweglichkeiten der Ladungsträger.

Weitere Vorteile und Merkmale der vorliegenden Erfindung ergeben sich aus der nachfolgenden, nicht beschränkenden Beschreibung beispielhafter Ausführungsformen anhand der Figuren. Dabei zeigt:
- **Figur 1**: eine schematische Schnittdarstellung eines elektrochemischen Speicherelements,
- **Figur 2**: das elektrochemische Speicherelement der Figur 1 mit eingezeichneten Ladungsverschiebungen,
- **Figur 3**: eine andere Ausführungsform eines elektrochemischen Speicherelements in einer schematischen Schnittdarstellung,
- **Figur 4**: das elektrochemische Speicherelement der Figur 3 mit eingezeichneten Ladungsverschiebungen und
- **Figur 5**: ein Diagram des Spannungsverlaufs über der Zeit beim Laden und Entladen eines erfindungsgemäßen Speicherelements sowie eines herkömmlichen Speicherelements.

In den Figuren 1 bis 4 sind beispielhaft für die Erfindung Flachzellen dargestellt. Die in der Figur 1 gezeigte erste Ausführungsform einer Flachzelle weist eine Anode 1 und eine Kathode 2 auf. Anode 1 und Kathode 2 sind mittels eines Separators 3 voneinander getrennt. Die Anode 1 ist zweischichtig aufgebaut und weist eine Anodenhochenergieschicht 6 sowie eine Anodenhochleistungsschicht 7 auf. In ähnlicher Weise ist ebenfalls die Kathode 2 zweischichtig aufgebaut und weist eine Kathodenhochenergieschicht 8 sowie eine Kathodenhochleistungsschicht 9 auf. Die Schichten von Anode 1 und Kathode 2 sind derart angeordnet, dass die Anodenhochleistungsschicht 7 sowie Kathodenhochleistungsschicht 9 an den Separator 3 angrenzen. Auf der dem Separator 3 gegenüberliegenden Seite der Anodenhochleistungsschicht 7 bzw. der Kathodenhochleistungsschicht 9 ist die Anodenhochenergieschicht 6 bzw. die Kathodenhochenergieschicht 8 angeordnet.

Auf der der Anodenhochleistungsschicht 7 gegenüberliegenden Seite der Anodenhochenergieschicht 6 ist ein Anodenstromsammler 4 angeordnet. Auf der der Kathodenhochleistungsschicht 9 gegenüberliegenden Seite der Kathodenhochenergieschicht 8 ist ein Kathodenstromsammler 5 angeordnet. Die Stromsammler 4, 5 dienen einer äußeren Ankontaktierung der Flachzelle.

In der Figur 2 sind die Stromflüsse und die Beweglichkeiten der Ladungsträger für jede Schicht beim Entladevorgang der Flachzelle dargestellt. Die Stärke der eingezeichneten Pfeile steht dabei für die erforderliche Beweglichkeit des Ladungsträgers in der jeweiligen Schicht. Die erforderliche Beweglichkeit der Elektronen ist in allen Schichten der Flachzelle verhältnismäßig hoch. Der Grund hierfür ist, dass die Elektronen sowohl unter geringer Belastung als auch unter hoher Belastung der Flachzelle den gesamten Stromkreis durchlaufen müssen.

Der Elektronenfluss muss durch einen entsprechenden Ionenfluss ausgeglichen werden. Geschieht dies nicht, kommt es zum Aufbau innerer elektrischer Felder in der Flachzelle, die weitere Ladungsverschiebungen erschwert oder abschwächt. In den auf eine hohe Belastbarkeit hin ausgelegten Schichten, d. h. der Anodenhochleistungsschicht 7 sowie der Kathodenhochleistungsschicht 9, und in dem rein ionenleitenden Separator 3 ist eine hohe Ionenbeweglichkeit erforderlich, um die verhältnismäßig große Ladungsverschiebung durch Elektronen auszugleichen und den Aufbau eines elektrischen Feldes in den Hochleistungsschichten 7, 9 zu verhindern oder zu minimieren. In der Anodenhochenergieschicht 6 und der Kathodenhochenergieschicht 8 ist lediglich nur eine verhältnismäßig geringe Ionenbeweglichkeit erforderlich, da hierdurch nur Verschiebungen von Elektronen der jeweiligen Hochenergieschicht ausgeglichen werden müssen.

Die Elektronenbeweglichkeit in den Hochenergieschichten 6, 8 muss verhältnismäßig hoch sein, um die verhältnismäßig großen, aus der jeweiligen Hochleistungsschicht 7, 9 stammenden Ladungsmengen der Elektronen durch die jeweilige
Hochenergieschicht 6, 8 hindurchzulassen.

In der Figur 3 ist eine alternative Ausführungsform der Flachzelle dargestellt. Sie unterscheidet sich von der in den Figuren 1 und 2 dargestellten Ausführungsform durch eine andere Schichtabfolge. In gleicher Weise sind angrenzend an einen Separator 3 eine Anodenhochleistungsschicht 7 sowie eine Kathodenhochleistungsschicht 9 angeordnet. Gleichfalls sind eine Anodenhochenergieschicht 6 sowie eine Kathodenhochenergieschicht 8 vorgesehen. Anders als bei der in Figuren 1 und 2 dargestellten Ausführungsform ist der Anodenstromsammler 4 jedoch zwischen der Anodenhochleistungsschicht 7 und der Anodenhochenergieschicht 6 und der Kathodenstromsammler 5 zwischen der Kathodenhochleistungsschicht 9 und der Kathodenhochenergieschicht 8 angeordnet. Durch diese Anordnung ist es in vorteilhafterweise möglich, die Elektronenlaufwege durch die Folienschichten zu verkürzen. Dieser Unterschied wird bei Betrachtung der Figur 3 klar. In dieser sind die jeweiligen Beweglichkeiten der Ladungsträger in ähnlicher Weise wie in der Figur 2 eingezeichnet. Die erforderliche Elektronen- und Ionenbeweglichkeit in den Hochleistungsschichten 7, 9 sind verhältnismäßig hoch. Wie auch bei der in der Figur 2 dargestellten ersten Ausführungsform ist die Ionenbeweglichkeit in den jeweiligen Hochenergieschichten 6, 8 verhältnismäßig gering. Anders als in dieser Ausführungsform ist auch die Elektronenbeweglichkeit in den beiden Hochenergieschichten 6, 8 gering. Grund hierfür ist, dass durch die Hochenergieschichten 6, 8 keine aus den Hochleistungsschichten 7, 9 stammenden Elektronen hindurch geleitet werden müssen und der Ionenstrom in den Hochenergieschichten 6, 8 lediglich Ladungsverschiebungen durch Verschiebungen der aus dem Material der Hochenergieschichten 6, 8 stammenden Elektronen ausgleichen muss.

Im Nachfolgenden wird ein beispielhafter Versuchsaufbau zur vorliegenden Erfindung beschrieben. Bei diesem wurden Zellen mit einer 2-schichtigen Lithiumtitanat-Folie in der negativen Elektrode sowie mit LP30 (EC/DMC 1:1, 1M LiPF₆) basiertem Elektrolyten hergestellt und vermessen.

Die positive Elektrode wurde hergestellt, indem PVDF als Binder (Kynar LBG2) in Aceton gelöst wurde. In diese Lösung wurden dann Lithiumkobaltoxid-Pulver (42 Gew.-%) mit 6 µm mittlerer Korngröße, Graphit (2 Gew.-%) und Acetylenruß (2 Gew.-%) beigegeben, das ganze mit einem Rührwerk innig vermischt und zu einer viskosen, gleichmäßigen Paste verarbeitet. Diese Paste wurde anschließend mit einem Rakel auf einer Glasplatte gezogen und das Lösungsmittel abgedampft. Die so gefertigte Folie hatte eine Flächenladung von 3,5 mAh/cm² bei einer Dicke von 120 µm.

Die negative Elektrode besaß den zweischichtigen erfindungsgemäßen Aufbau. Ihre Hochenergieschicht wurde hergestellt, indem der Binder PVDF (Kynar LBG2) in Aceton gelöst wurde. Danach wurden Li₄Ti₅O₁₂ (28 Gew.-%) und Acetylenruß (5 Gew.-%) zugegeben und innig miteinander vermischt. Beim zugegebenen Lithiumtitanat handelt es sich um ein Hochenergiematerial mit einer mittleren Primärpartikelgröße von ca. 1 µm und einem geringen Agglomerationsgrad. Die so erhaltene pastöse Masse wurde mit einem Rakel auf einer Glasplatte gezogen und das Lösungsmittel abgedampft. Die so erzeugte Folie mit einer Dicke von 140 µm hatte eine Flächenkapazität von 2,6 mAh/cm².

Die Hochleistungsschicht wurde hergestellt, indem der Binder PVDF (Kynar LBG2) in Aceton gelöst wurde. Danach wurden Li₄Ti₅O₁₂ (25 Gew.-%) und Acetylenruß (5 Gew.-%) zugegeben und innig miteinander vermischt. Beim zugegebenen Lithiumtitanat handelt es sich um ein Hochleistungsmaterial, was sich in einer deutlich geringeren mittleren Primärpartikelgröße von ca. 500 nm und einem erhöhten Agglomerationsgrad gegenüber dem in der Hochenergieschicht verwendeten Lithiumtitanat widerspiegelt. Diese Agglomeration führt zu einer guten Verarbeitbarkeit unter Erhalt der Eigenschaften der sehr kleinen Primärpartikel. Die Flächenkapazität der auf hohe Belastbarkeiten ausgelegten Folie betrug 0,9 mAh/cm², die Schichtdicke 118 µm.

Beide Folien (Hochleistungsschicht, Hochenergieschicht) wurden nach dem Trocknungsprozess mit einem Rollenlaminator und einem Liniendruck von 120 kg/cm bei einer Temperatur von 155 °C miteinender verbunden.

Für die Separatorlage wurden 75 Gew.-% Li_{1,3}Al_{0,3}Ti_{1,7}(PO₄)₃-Pulver innig mit in Aceton gelöstem PVDF (25 Gew.%) vermischt und zu einer Folie mit einer Dicke von ca. 50 µm ausgezogen. Als Elektrolyt wurde eine 1 M Lösung des Leitsalzes LiPF₆ in einer Mischung von Ethylencarbonat (EC) und Dimethylcarbonat (DMC) 1:1 (Standardelektrolyt, Typenbezeichnung LP30) verwendet.

In diesem Beispiel wurde der Stromsammler entsprechend Figur 1 angebracht. Die Lamination zum Zellkörper erfolgt mittels statischer Lamination bei einer Temperatur von 160°C und einem Druck von 1,9 MPa. Der Batteriekörper wurde in einer metallisierten Kunststofffolie hermetisch eingeschweißt. Dieses Verfahren ist dem Fachmann als Pouch- bzw. Coffee-Bag-Technologie bekannt.

Als Referenz wurde eine zweite Zelle gebaut, deren Elektroden jeweils keinen mehrschichtigen Aufbau besaßen. Deren positive Elektrode wurde hergestellt, indem PVDF als Binder (Kynar LBG2) in Aceton gelöst wurde. In diese Lösung wurden dann Lithiumkobaltoxid-Pulver (42 Gew.%), Graphit (2 Gew.%) und Acetylenruß (2 Gew.%) beigegeben, alles mit einem Rührwerk innig vermischt und zu einer viskosen, gleichmäßigen Paste verarbeitet. Diese Paste wurde anschließend mit einem Rakel auf einer Glasplatte gezogen und das Lösungsmittel abgedampft. Die so gefertigte Folie hatte eine Flächenladung von 3,05 mAh/cm² bei einer Dicke von 103 µm.

Die negative Elektrode wurde hergestellt, indem der gleiche Binder PVDF (Kynar LBG2) in Aceton gelöst wurde. Danach wurden Li₄Ti₅O₁₂ (28 Gew.-%) mit einer mittleren Partikelgröße von 1 µm und Acetylenruß (1,7 Gew.%) zugegeben und innig miteinander vermischt. Die so erhaltene Paste wurde anschließend mit einem Rakel auf einer Glasplatte gezogen und das Lösungsmittel abgedampft. Die Kapazität war mit 3,1 mAh/cm² der Kathodenkapazität angepasst, die Dicke betrug 165 µm.

Für die Separatorlage wurden 75 Gew.-% Li_{1,3}Al_{0,3}Ti_{1,7}(PO₄)₃-Pulver innig mit in Aceton gelöstem PVDF (25 Gew.%) vermischt und zu einer Folie mit einer Dicke von ca. 50 µm ausgezogen.

Aus diesen Folien wurden ebenfalls Testzellen hergestellt mit einem Standardelektrolyt LP30, in dem Anode, Separator und Kathode vor der Elektrolytzugabe mit einem statischen Laminator bei 160°C und einem Druck von 1,9 MPa miteinander verschweißt wurden.

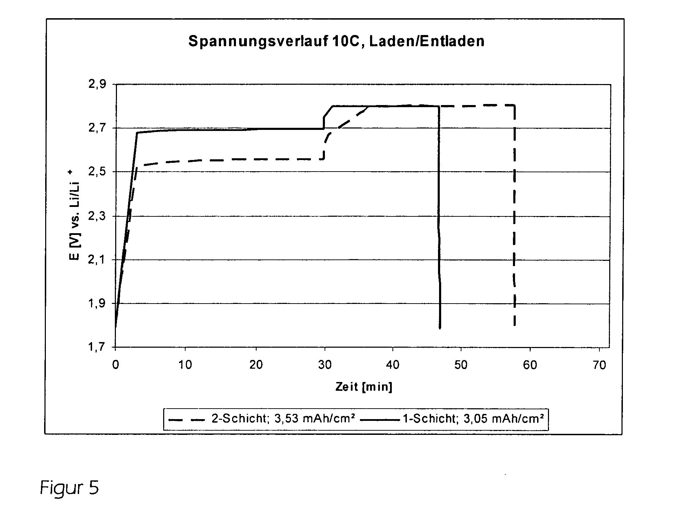

Die Zellen wurden nach der Fertigstellung in einer dem Fachmann bekannten Pouch-Technologie verpackt und bezüglich ihres elektrischen Verhaltens vergleichend getestet. Die Figur 5 zeigt den Spannungsverlauf beider Testzelltypen nach einer mehrfachen Lade-/ Entladebelastung mit 10C (Ladung bzw. Entladung innerhalb von 6 min; 1/10 einer Stunde). Am Ende jeder Entladung sind die Zellen auf 1,8 V entladen. Dies ist der Startpunkt auf der Spannungsachse in der Abbildung 5. Durch diffusionsbedingte Ausgleichsvorgänge, die durch den Innenwiderstand der Zelle bedingt sind, und Wiederherstellung des Zellgleichgewichts steigt nach der kompletten Entladung auf 1,8 V in der Ruhephase bis zum nächsten Ladeschritt die Spannung langsam wieder an. Je höher der Innenwiderstand ist, desto höher der Spannungsanstieg. Bei den dicken, 2-lagigen Elektroden (als 2-Schicht bezeichnet in Figur 5) springt die Spannung auf ca. 2,55 V, während bei der dünneren 1-lagigen Elektrodenstruktur (als 1-Schicht bezeichnet in Figur 5) in der gleichen Zeit die Spannung auf ca. 2,7 V ansteigt. Dies ist ein überraschendes Ergebnis, da im Verständnis des Standes der Technik das Verhalten genau umgekehrt erwartet wurde, da dicke Elektroden einen erhöhten Innenwiderstand hervorrufen. Beginnt man nun nach der Ruhephase von 30 Minuten mit einem Ladevorgang, so steigt die Spannung beim 1-Schicht-System sehr viel schneller an im Vergleich zum 2-Schicht-System, was ebenfalls nicht dem erwarteten Verhalten entspricht. Dies ist umso überraschender, als die Messung des Innenwiderstandes mittels Impedanzspektroskopie keinen Hinweis auf ein deutlich verbessertes Verhalten des 2-Schichtsystems unter hoher Belastung liefert. Die 2-Schicht-Zelle weist bei 1 kHz eine Impedanz von 808 mΩ auf und die 1-Schicht-Zelle 793,3 mΩ. Dieser Unterschied ist so gering, dass kein gravierend unterschiedliches elektrisches Verhalten insbesondere bzgl. der Belastung zu erwarten gewesen wäre.

### Bezugszeichenliste

- 1: Anode
- 2: Kathode
- 3: Separator
- 4: Stromsammler Anode
- 5: Stromsammler Kathode
- 6: Anoden-Hochenergieschicht A
- 7: Anoden-Hochleistungsschicht K
- 8: Kathoden-Hochenergieschicht A
- 9: Kathoden-Hochleistungsschicht K
- 10: Pfeil für Elektronenbeweglichkeit
- 11: Pfeil für Ionenbeweglichkeit

## Patentansprüche

1. Elektrodenschichtverbund zur Ausbildung flächiger Elektroden (1,2) in elektrochemischen Speicherelementen, der wenigstens eine erste elektrodenmaterialhaltige Schicht (6,8) und eine zweite elektrodenmaterialhaltige Schicht (7,9) aufweist, wobei die erste Schicht (6,8) eine höhere spezifische Kapazität als die zweite Schicht (7,9) besitzt, während die zweite Schicht (7,9) eine höhere Leistungsdichte oder Flächenstromtragfähigkeit als die erste Schicht (6,8) besitzt.

2. Elektrodenschichtverbund nach Anspruch 1, **dadurch gekennzeichnet, dass** die erste Schicht (6,8) eine größere Schichtdicke als die zweite Schicht (7,9) aufweist.

3. Elektrodenschichtverbund nach Anspruch 1 oder 2, **dadurch gekennzeichnet, dass** das Elektrodenmaterial beider Schichten in Form von Partikeln vorliegt und das Material der ersten Schicht (6,8) einen größeren Partikeldurchmesser als das Material der zweiten Schicht (7,9) besitzt.

4. Elektrodenschichtverbund nach Anspruch 3, **dadurch gekennzeichnet, dass** der Partikeldurchmesser des Elektrodenmaterials der ersten Schicht das 1,5-fache bis 7,5-fache des Partikeldurchmessers des Elektrodenmaterials der zweiten Schicht beträgt.

5. Elektrodenschichtverbund nach einem der voranstehenden Ansprüche, in dem jede der Schichten weiterhin einen Binder aufweist.

6. Elektrodenschichtverbund nach Anspruch 5, worin der Binder ein Polymermaterial sowie optional einen Weichmacher enthält.

7. Elektrodenschichtverbund nach einem der voranstehenden Ansprüche in Gestalt eines Folienverbunds.

8. Elektrodenschichtverbund nach Anspruch 7, **dadurch gekennzeichnet, dass** der Verbund weiterhin einen flächigen Stromsammler aufweist, der vorzugsweise mittelbar oder unmittelbar an der ersten Schicht (6,8) mit höherer spezifischer Kapazität angeordnet ist.

9. Elektrodenschichtverbund nach Anspruch 8, **dadurch gekennzeichnet, dass** die zweite Schicht (7,9) über die erste Schicht (6,8) mit dem Stromsammler verbunden ist.

10. Elektrodenschichtverbund nach Anspruch 8, **dadurch gekennzeichnet, dass** der Stromsammler zwischen der ersten (6,8) und der zweiten Schicht (7,9) angeordnet ist, vorzugsweise diese unmittelbar kontaktierend.

11. Elektrochemisches Speicherelement zur Speicherung sowie Abgabe elektrischer Energie mit einer flächenförmigen Anode, einem Separator und einer flächenförmigen Kathode, wobei die Anode und/oder die Kathode einen Elektrodenschichtverbund nach einem der Ansprüche 1 bis 10 aufweist bzw. aufweisen.

12. Elektrochemisches Speicherelement nach Anspruch 11, **dadurch gekennzeichnet, dass** der Separator zwischen der zweiten Schicht (7) (Hochleistungsschicht) der Anode und der zweiten Schicht (9) (Hochleistungsschicht) der Kathode angeordnet ist und vorzugsweise mit diesen in unmittelbaren Kontakt steht.

13. Elektrochemisches Speicherelement nach einem der Ansprüche 11 oder 12, **dadurch gekennzeichnet, dass** der Stromsammler eine offenporige Struktur aufweist, so dass Lithium-Ionen durch den Stromsammler hindurch treten können, wobei der Stromableiter insbesondere eine perforierte Metallfolie oder ein Streckmetall ist.

14. Verfahren zur Herstellung eines Elektrodenschichtverbunds nach einem der Ansprüche 1 bis 10 oder eines elektrochemischen Speicherelements nach einem der Ansprüche 11 bis 13, **dadurch gekennzeichnet, dass** die erste Schicht (6,8) und die zweite Schicht (7,9) getrennt hergestellt und anschließend unter Druck- und/oder Temperatureinwirkung laminiert werden.

15. Verfahren zur Herstellung eines Elektrodenschichtverbunds nach einem der Ansprüche 1 bis 10 oder eines elektrochemischen Speicherelements nach einem der Ansprüche 11 bis 13, **dadurch gekennzeichnet, dass** zunächst eine der beiden Schichten (6,7,8,9) in einem Tapecasting-Prozess hergestellt wird und die andere Schicht (6,7,8,9) nachfolgend in einem weiteren Tapecasting-Prozess auf der einen Schicht (6,7,8,9) abgeschieden wird.
